# EUROPÄISCHE PATENTANMELDUNG

(11) **EP 0 536 638 A2**
(43) Veröffentlichungstag der Anmeldung: **14.04.1993**
(21) Anmeldenummer: 92116798.7
(22) Anmeldetag: 01.10.1992
(51) Int. Cl.: C09D 5/44

(54) **Kathodisch abscheidbarer Elektrotauchlack**

(30) Priorität: 08.10.1991 DE 4133299
(71) Anmelder: BASF Lacke + Farben AG, D-48165 Münster-Hiltrup (DE)
(72) Erfinder: Huemke, Klaus, Dr., W-6701 Friedelsheim (DE); Hoffmann, Gerhard, Dr., W-6701 Otterstadt (DE); Faul, Dieter, Dr., W-6702 Bad Duerkheim (DE)
(74) Vertreter: Langfinger, Klaus-Dieter, Dr.

(57) **Zusammenfassung**

Die Erfindung betrifft einen Elektrotauchlack, enthaltend ein kathodisch abscheidbares Kunstharz und als Antischaummittel eine Mischung aus
a. 50 - 70 Gew.-% eines Esters der Stearinsäure mit einem C₂-C₂₀-Alkohol,
b. 5 - 30 Gew.-% eines Fettalkoholphosphats
c. 5 - 30 Gew.-% eines C₈-C₂₀-Kohlenwasserstoffgemisches.

## Beschreibung

Gegenstand der Erfindung ist ein Elektrotauchlack, der ein kathodisch abscheidbares Kunstharz sowie ein Antischaummittel enthält.

Elektrotauchlacke auf Basis von kathodisch abscheidbaren Kunstharzen sind bekannt, mit ihnen können qualitativ hervorragende Lackierungen auf metallischen Substraten, z. B. Grundierungen von Automobilkarosserien erzielt werden. Oft treten jedoch im eingebrannten Film dem Fachmann gut bekannte Oberflächenstörungen auf. In den meisten Fällen sind in das Elektrotauchlackbad eingeschleppte Verunreinigungen die Ursache für das Auftreten dieser Oberflächendefekte, die sich zum größten Teil in Form von Kratern bemerkbar machen. Als Beispiele für solche Verunreinigungen seien Tiefziehfette, Korrosionsschutzfette, Nahtabdichtungsmaterialien, Schmierfette usw. genannt. Durch das Austreten von Luftresten aus Hohlräumen beim Eintauchen der zu beschichtenden Substrate in das Elektrotauchbad kommt es häufig zur Ausbildung eines Films von Schaumbläschen auf der Oberfläche des Elektrotauchlackbades. Diese Schäume führen in manchen Fällen zu Karosseriepartien mit ungenügender Lackbeschichtung, die manuell nachgebessert werden müssen. Für die Verhinderung solcher Schaumprobleme ist daher der Einsatz spezieller Antischaummittel notwendig.

Es sind eine Reihe von Versuchen bekannt, das Auftreten von Oberflächenstörungen durch Schäume mit Additiven zu unterdrücken. So können den Elektrotauchlacken z. B. Silikonöle zugesetzt werden. Auf diese Weise lassen sich zwar die Oberflächenstörungen im allgemeinen beseitigen, dafür treten aber in aller Regel auf Haftungsstörungen zurückzuführende Probleme in überlackierten Lackschichten - wie z. B. Füller und Decklack - auf.

Der Erfindung lag daher die Aufgabe zugrunde, ein wirksames Zusatzmittel bereitzustellen, welches die bei der Dispersionsherstellung und späteren Applikation im Elektrotauchlackbad auftretenden Schaumprobleme schnell, zuverlässig und nachhaltig beseitigen kann.

Diese Aufgabe wird erfindungsgemäß gelöst, wenn als Antischaummittel eine Mischung aus
a. 50 - 70 Gew.-% eines Esters der Stearinsäure mit einem C₂-C₂₀-Alkohol,
b. 5 - 30 Gew.-% eines Fettalkoholphosphats
c. 5 - 30 Gew.-% eines C₈-C₂₀-Kohlenwasserstoffgemisches.
eingesetzt wird.

Die durch die Erfindung erreichten Vorteile sind im wesentlichen darin zu sehen, daß mit dem erfindungsgemäßen Lack Filme erhalten werden, die keine bzw. nur sehr geringe Oberflächenstörungen und bei überlackierten Lackschichten keine Haftungsprobleme zeigen. Die erfindungsgemäß eingesetzten Elektrotauchlacke zeigen überraschenderweise eine ausgezeichnete Kontaminationsresistenz sowie keinerlei Schaumprobleme und damit verbundene Lackfehlstellen.

Die erfindungsgemäß eingesetzten Elektrotauchlackbäder können prinzipiell alle für die Herstellung von Elektrotauchlackbädern geeigneten kathodisch abscheidbaren fremd- oder selbstvernetzenden Kunstharze enthalten.

Bevorzugt sind die Elektrotauchlackbäder, die kationische, aminmodifizierte Epoxidharze als kathodisch abscheidbare Kunstharze enthalten. Es sind sowohl selbst- als auch fremdvernetzende kationische aminmodifizierte Epoxidharze bekannt. Bevorzugt werden fremdvernetzende kationische aminmodifizierte Epoxidharze eingesetzt.

Unter kationischen aminmodifizierten Epoxidharzen werden kationische Reaktionsprodukte aus
(A) ggf. modifizierten Polyepoxiden und
(B) Aminen
verstanden.

Polyepoxiden sind Verbindungen mit zwei oder mehr Epoxidgruppen im Molekül. Besonders bevorzugte (A)-Komponenten sind Verbindungen, die herstellbar sind durch Umsetzung
(a) einer Diepoxidverbindung oder eines Gemisches von Diepoxidverbindungen mit einem Epoxidäquivalentgewicht unter 2000 mit
(b) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,
wobei die Komponenten (a) und (b) in einem Molverhältnis von 10:1 bis 1:1, bevorzugt 4:1 bis 1,5:1, eingesetzt werden und die Umsetzung der Komponente (a) mit der Komponente (b) bei 100 bis 190°C gegebenenfalls in Anwesenheit eines Katalysators durchgeführt wird (vgl. DE-OS-35 18 770).

Weitere besondere bevorzugte (A)-Komponenten sind Verbindungen, die herstellbar sind durch eine bei 100 bis 195°C, gegebenenfalls in Anwesenheit eines Katalysators durchgeführte, durch einen monofunktionell reagierenden Starter, der entweder eine alkoholische OH-Gruppe, eine phenolische OH-Gruppe oder eine SH-Gruppe trägt, initiierten Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2:1 bis 10:1 eingebaut sind.

Polyepoxide, die zur Herstellung der besonders bevorzugten (A)-Komponenten und auch selbst als (A)-Komponenten einsetzbar sind, sind aus Polyphenolen und Epihalohydrinen hergestellte Polyglycidylether von Polyphenolen. Als Polyphenole können z. B. ganz besonders bevorzugt Bisphenol A und Bisphenol F eingesetzt werden. Außerdem sind auch 4,4'-Dihydroxybenzophenon, Bis-(4-hydroxyphenyl)-1,1-ethan, Bis-(4-hydroxyphenyl)-1,1-isobutan, Bis-(4-hydroxy-tertiärbutylphenyl)-2,2-propan, Bis-(2-hydroxynaphthyl)-methan, 1,5-Dihydroxynaphthalin und phenolische Novolakharze geeignet.

Weitere geeignete Polyepoxide sind Polyglycidylether von mehrwertigen Alkoholen, wie z. B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl)-2,2-propan.

Weitere geeignete Polyepoxide sind Polyglycidylether von mehrwertigen Alkoholen, wie z. B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl-)2,2-propan.

Es können auch Polyglycidylester von Polycarbonsäuren, wie z. B. Oxalsäure, Bernsteinsäure, Glutarsäure, Terephthalsäure, 2,6-Naphthalindicarbonsäure, dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindung umgesetzt worden ist.

Als Beispiele für modifizierende Verbindungen werden genannt:
a) Carboxylgruppenhaltige Verbindungen wie gesättigte oder ungesättigte Monocarbonsäuren (z. B. Benzoesäure, Leinölfettsäure, 2-Ethylhexansäure, Versaticsäure), aliphatische, cycloaliphatische und/oder aromatische Dicarbonsäuren verschiedener Kettenlänge (z. B. Adipinsäure, Sebacinsäure, Isophthalsäure oder dimere Fettsäuren), Hydroxyalkylcarbonsäuren (z. B. Milchsäure, Dimethylolpropionsäure) sowie carboxylgruppenhaltige Polyester oder
b) aminogruppenhaltige Verbidungen wie Diethylamin oder Ethylhexylamin oder Diamine mit sekundären Aminogruppen, z. B. N,N'-Dialkylalkylendiamine wie Dimethylethylendiamin, N,N'-Dialkyl-polyoxialkylenamine wie N,N'-dimethylpolyoxipropylendiamin, cyanalkylierte Alkylendiamine wie Bis-N,N'-Cyanethyl-ethylendiamin, cyanalkylierte Polyoxialkylenamine wie Bis-N,N'-Cyanethylpolyoxipropylendiamin, Polyaminoamide wie z. B. Versamide, insbesondere endständige Aminogruppen enthaltende Umsetzungprodukte aus Diaminen (z. B. Hexamethylendiamin), Polycarbonsäuren, insbesondere Fettsäuren, oder das Umsetzungsprodukt von einem Mol Diaminohexan mit zwei Molen Monoglycidylether oder Monoglycidylester, speziell Glycidylester α-verzweigter Fettsäuren wie der Versaticsäure, oder
c) hydroxylgruppenhaltige Verbindungen wie Neopentylglykol, Bis-ethoxiliertes Neopentylglykol, Hydroxipivalinsäureneopentylglykolester, Dimethylhydartoin-N,N'-diethanol, Hexandiol-1,6, Hexandiol-2,5, 1,4-Bis-(hydroximethyl)-cyclohexan, 1,1-Isopropyliden-bis-(p-phenoxi)-2-propanol, Trimethylolpropan, Pentaeryhtrit oder Aminoalkohole wie Triethanolamin, Methyldiethanolamin oder hydroxylgruppenhaltige Alkylketimine wie Aminomethylpropandiol-1,3-methyl-isobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder
d) gesättigte oder ungesättigte Fettsäuremethylester, die in Gegenwart von Natriummethylat mit Hydroxylgruppen der Epoxidharze umgeestert werden.

Als Komponente (B) können primäre und/oder sekundäre Amine eingesetzt werden.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin u. dgl. Geeignet sind ebenfalls Alkanolamine, wie z. B. Methylethanolamin, Diethanolamin u. dgl. Ferner sind Dialkylaminoalkylamine, wie z. B. Dimethylaminoethylamin, Diethylaminopropylamin, Dimethylaminopropylamin u. dgl. geeignet. In den meisten Fällen werden niedermolekulare Amine verwendet, doch ist es auch möglich, höhermolekulare Monoamine anzuwenden.

Die Amine können auch noch andere Gruppen enthalten, doch sollen diese die Umsetzung des Amins mit der Epoxidgruppe nicht stören und auch nicht zu einer Gelierung der Reaktionsmischung führen.

Bevorzugt werden sekundäre Amine als (B)-Komponenten eingesetzt.

Die für die Wasserverdünnbarkeit und elektrische Abscheidung erforderlichen Ladungen können durch Protonisierung mit wasserlöslichen Säuren (z. B. Borsäure, Ameisensäure, Milchsäure oder Essigsäure) erzeugt werden.

Eine weitere Möglichkeit zur Einführung kationischer Gruppen in die Komponente (A) besteht in der Umsetzung von Epoxidgruppen der Komponente (A) mit Aminsalzen.

Die kationischen aminmodifizierten Epoxidharze können sowohl als fremdvernetzende Kunstharze als auch als selbstvernetzende Kunstharze eingesetzt werden. Selbstvernetzende kationische aminmodifizierte Epoxidharze können beispielsweise duch chemische Modifikation der kationischen aminmodifizierten Epoxidharze erhalten werden. Ein selbstvernetzendes System kann z.B. dadurch erhalten werden, daß das kationische aminmodifizierte Epoxidharz mit einem teilblockierten Polyisocyanat, das im Durchschnitt eine freie Isocyanatgruppe pro Molekül besitzt und dessen blockierte Isocyanatgruppe erst bei erhöhten Temperaturen entblockt werden, umgesetzt wird.

Bevorzugte Elektrotauchlackbäder werden erhalten, wenn als kathodisch abscheidbare Kunstharze fremdvernetzende kationische aminomodifizierte Epoxidharze in Kombination mit einem geeigneten Vernetzungsmittel eingesetzt werden.

Beispiele für geeignete Vernetzungsmittel sind Phenoplaste, polyfunktionelle Mannichbasen, Melaminharze, Benzoguanaminharze, blockierte Polyisocyanate und Verbindungen, die mindestens zwei Gruppierungen der allgemeinen Formel R¹-O-CO-enthalten.
- R¹ =: R²O-CO-CH₂-, R³-CHOH-CH₂-, R⁴-CHOR⁵-CHOH-CH₂-
- R² =: Alkyl
- R³ =: H,Alkyl,R⁶-O-CH₂ oder R⁶-CO-O-CH₂-
- R⁴ =: H oder Alkyl
- R⁵ =: H, Alkyl oder Aryl
- R⁶ =: Alkyl, Cycloalkyl oder Aryl
Bevorzugte Elektrotauchlackbäder werden erhalten, wenn als Vernetzungsmittel blockierte Polyisocyanate und/oder Verbindungen, die mindestens zwei Gruppierungen der allgemeinen Formel R¹-O-CO- enthalten, eingesetzt werden.

Als blockierte Polyisocyanate können beliebige Polyisocyanate benutzt werden, bei denen die Isocyanatgruppen mit einer Verbindung umgesetzt worden sind, so daß das gebildete blockierte Polyisocyanat gegenüber Hydroxyl- und Aminogruppen bei Raumtemperatur beständig ist, bei erhöhten Temperaturen, in der Regel im Bereich von etwa 90°C bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis etwa 15 Kohlenstoffatome enthalten. Beispiele geeigneter Diisocyanate sind Hexamethylendiisocyanat, 2,4-Toluylendiisocyanat, 2,6-Toluylendiisocyanat und 1-Isocyanatomethyl-5-isocyanato-1,3,3-trimethylcyclohexan. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole wie Cyclopentanol und Cyclohexanol; aromatische Alkylalkohole, wie Phenylcarbinol und Methylphenylcarbinol.

Andere geeignete Blockierungsmitel sind Hydroxylamine wie Ethanolamin, Oxime wie Methylethylketonoxim, Acetonoxim und Cyclohexanonoxim oder Amine wie Dibutylamin und Diisopropylamin. Die genannten Polyisocyanate und Blockierungsmittel können bei geeigneten Mengenverhältnissen auch zur Herstellung der oben erwähnten teilblockierten Polyisocyanate verwendet werden.

Beispiele für Verbindungen, die mindestens zwei Gruppierungen der allgemeinen Formel R¹-O-CO- enthalten sind Bis-(carbalkoxymethyl)azelat, Bis-(carbalkoxymethyl)sebacat, Bis-(carbalkoxymethyl)adipat, Bis-(carbalkoxymethyl)decanat, Bis-(carbalkoxymethyl)terephthalat, Bis-(2-hydroxybutyl)-acetat und Bis-(2-hydroxyethyl)terephthalat.

Das Vernetzungsmitel wird in der Regel in einer Menge von 5 bis 60 Gew.-%, bevorzugt 20 bis 40 Gew.-%, bezogen auf das kationische aminmodifizierte Epoxidharz, eingesetzt.

Die erfindungsgemäß eingesetzten Elektrotauchlackbäder werden nach allgemein gut bekannten Methoden hergestellt. Die Synthese der kathodisch abscheidbaren Kunstharze erfolgt nach gut bekannten Methoden (vgl. z. B. DE-OS 35 18 732, DE-OS 35 18 770, EP-A 4 090 und EP-A 12 463) in organischen Lösemitteln. Die so erhaltenen Kunstharzlösungen bzw. -dispersionen werden in neutralisierter Form in eine wäßrige Phase überführt.

Pigmente werden vorzugsweise in Form einer Pigmentpaste in die wäßrige Dispersion der kathodisch abscheidbaren Harze eingearbeitet.

Die Herstellung von Pigmentpasten ist allgemein bekannt und braucht hier nicht näher erläutert zu werden (vgl. D.H. Parker, Principles of Surface Coating Technology, Intersience Publishers, New York (1965); R.L. Yates, Electropainting, Robert Draper Ltd., Teddington/England (1966); H.F. Payne, Organic Coating Technology, Band 2 Wiley and Sons, NeW York (1961)).

Die Pigmentpasten können im Prinzip alle für Elektrotauchlacke geeigneten Pigmente enthalten. Im allgemeinen ist Titandioxyd das einzige oder das hauptsächliche weiße Pigment. Andere weiße Pigmente oder Streckmittel, wie Antimonoxid, Zinkoxid, basisches Bleicarbonat, basisches Bleisulfat, Bariumcarbonat, Porzellan, Ton, Kalciumcarbonat, Aluminiumsilikat, Siliciumdioxid, Magnesiumcarbonat und Magnesiumsilikat können aber auch verwendet werden. Als farbige Pigmente können beispielsweise Cadmiumgelb, Cadmiumrot, Ruß, Phthalocyaninblau, Chromgelb, Toluidylrot und hydratisiertes Eisenoxid benutzt werden.

Die Pigmentpaste kann neben den Pigmenten auch noch Weichmacher, Füllstoffe, Netzmittel usw. enthalten.

Die Pigmentpaste wird in einer solchen Menge zur wäßrigen Dispersion des kathodisch abscheidbaren Kunstharzes gegeben, daß das fertige Elektrotauchlackbad die für die Abscheidung erforderlichen Eigenschaften aufweist. In den meisten Fällen beträgt das Gewichtsverhältnis zwischen Pigment und kathodisch abscheidbarem Kunstharz 0,05 bis 0,5.

Die erfindungsgemäßen Antischaummittel enthalten drei Komponenten:
a. einen Ester der Stearinsäure mit einem C₂-C₂₀-Alkohol, vorzugsweise Stearinsäureisodecylester,
b. einem Fettalkoholphosphat, vorzugsweise auf Basis eines C₁₆-C₁₈-Alkohols,
c. ein C₈-C₂₀-Kohlenwasserstoffgemisch, vorzugsweise SHELL-SOL K der Fa. SHELL mit C₁₀-C₁₃-Kohlenwasserstoffen.

Es gibt mehrere Möglichkeiten, die erfindungsgemäß eingesetzten Antischaummittel in Elektrotauchlackbäder einzuarbeiten. Sie werden vorzugsweise in die Pigmentpaste oder in die Kunstharzdispersion eingearbeitet. Dabei kann es vorteilhaft sein, die Antischaummittel in einem geeigneten Lösemittel (z. B. Ethylacetat, Butylglykol, hochsiedenden Mineralölfraktionen oder Testbenzin) anzulösen. Auch die Einbringung der Antischaummittel in das fertige Tauchlackbad als zusätzliche Komponente ist prinzipiell möglich.

Die Antischaummittel werden in solchen Mengen in die erfindungsgemäßen Elektrotauchlackbäder eingearbeitet, daß die fertigen Elektrotauchlackbäder vorzugsweise 10 bis 10 000 ppm, besonders bevorzugt 100 bis 1 500 ppm - bezogen auf Feststoff - enthalten. In vielen Fällen ist es notwendig, die zur Erzielung einer ausreichenden oder gewünschten Wirkung notwendige Menge an Antischaummittel mit Hilfe von dem Fachmann geläufigen Reihenversuchen zu ermitteln.

Die Elektrotauchlackbäder können neben dem kathodisch abscheidbaren Kunstharz, der Pigmentpaste und dem Antischaummittel noch andere übliche Zusatzstoffe enthalten, wie z. B. Zusatzlösemittel, Antioxidantien, oberflächenaktive Substanzen, usw.

Der Festkörper der erfindungsgemäß eingesetzten Elektrotauchlackbäder beträgt vorzugsweise 7 bis 35 Gew.-Teile, besonders bevorzugt 12 bis 25 Gew.-Teile. Der pH-Wert der Elektrotauchlackbäder liegt zwischen 4 und 8, vorzugsweise zwischen 5 und 7,5.

Das Elektrotauchlackbad wird mit einer elektrisch leitenden Anode und mit dem als Kathode geschalteten elektrisch leitfähigen Substrat in Berühung gebracht. Beim Durchgang von elektrischem Strom zwischen Anode und Kathode wird ein fest haftender Lackfilm auf der Kathode abgeschieden.

Die Temperatur des Elektrotauchlackbades soll zwischen 15 bis 35°C, bevorzugt zwischen 20 und 30°C liegen.

Die angelegte Spannung kann in einem großen Bereich schwanken und kann z. B. zwischen zwei und tausend Volt liegen. Typischerweise wird aber mit Spannungen zwischen 50 und 500 Volt gearbeitet. Die Stromdichte liegt in der Regel zwischen etwa 10 und 100 Ampere/m². Im Verlauf der Abscheidung fällt die Stromdichte ab.

Nach der Abscheidung wird der beschichtete Gegenstand abgespült und ist zum Einbrennen bereit.

Die abgeschiedenen Lackfilme werden im allgemeinen bei Temperaturen von 130 bis 200°C über eine Zeitdauer von 10 bis 60 Minuten, vorzugsweise bei 150 bis 180°C über eine Zeitdauer von 15 bis 30 Minuten, eingebrannt.

Das erfindungsgemäße Verfahren kann zum Beschichten von beliebigen elektrisch leitenden Substraten, insbesondere aber zum Beschichten von Metallen, wie Stahl, Aluminium, Kupfer und dergleichen eingesetzte werden.

Die im Beispiel genannten Teile und Prozente beziehen sich auf das Gewicht.

### Beispiel

1. Herstellung einer wäßrigen Kunstharzdispersion auf Basis eines kationischen aminmodifizierten Epoxidharzes
1.1 Herstellung eines aminmodifizierten Epoxidharzes
   In einem Reaktionsgefäß werden 1780 g Epikote 1001 (Epoxidharz der Fa. Shell mit einem Epoxidäquivalentgewicht von 500), 280 g Dodecylphenol und 105 g Xylol vorgelegt und unter Stickstoffatmosphäre bei 120°C aufgeschmolzen. Anschließend werden unter leichtem Vakuum Wasserspuren durch Auskreisen entfernt. Dann gibt man 3 g N,N-Dimethylbenzylamin zu, erwärmt die Reaktionsmischung auf 180°C und hält diese Temperatur für ca. 3 h, bis das Epoxidäquivalentgewicht (EEW) auf 1162 angestiegen ist. Sodann kühlt man und gibt in rascher Abfolge 131 g Hexylglykol, 131 g Diethylanolamin und 241 g Xylol zu. Dabei steigt die Temperatur leicht an. Danach läßt man das Reaktionsgemisch auf 90°C abkühlen und gibt zur weiteren Verdünnung 183 g Butylglykol und 293 g Isobutanol zu. Wenn die Temperatur auf 70°C gefallen ist, gibt man 41 g N,N-Dimethylaminopropylamin zu, hält diese Temperatur für 3 h und trägt aus.
   Das Harz hat einen Festgehalt von 70,2 % und einen Basengehalt von 0,97 Milliäquivalenten/Gramm.
1.2 Herstellung eines Vernetzungsmittels
   In einem Reaktionsgefäß werden unter Stickstoffatmosphäre 488 g über Isocyanuratbildung trimerisiertes Hexamethylendiisocyanat (Handelsprodukt der BASF AG mit einem Isocyanatäquivalentgewicht von 193) und 170 g Methylisobutylketon vorgelegt und auf 50°C erwärmt. Sodann läßt man 312 g Di-n-butylamin so zutropfen, daß die Innentemperatur bei 60 bis 70°C gehalten wird. Nach Ende der Zugabe wird noch 1 h bei 75°C gerührt und anschließend mit 30 g n-Butanol verdünnt und abgekühlt. Der Vernetzer hat einen Festgehalt von 79,6 % (1 h bei 130°C) und eine Aminzahl von kleiner 5 mg KOH/g.
1.3 Herstellung einer wäßrigen Kunstharzdispersion
   1120 g Harz gemäß 1.1. und 420 g Vernetzer gemäß 1.2. werden bei Raumtemperatur gerührt. Nachdem die Mischung homogen ist (ca. 15 bis 30 Minuten), werden 1,5 g Entschäumer (Entschäumer TP, Handelsprodukt der BASF AG) und 18 g Eisessig eingerührt. 678 g entionisiertes Wasser werden in 4 Portionen verteilt zugegeben. Anschließend wird mit weiteren 1154 g entionisiertem Wasser in kleinen Portionen weiter verdünnt.
   Die resultierende wäßrige Dispersion wird in einer azeotropen Vakuumdestillation von niedrigsiedenden Lösemitteln befreit und anschließend mit entionisiertem Wasser auf einen Festkörper von 33 % verdünnt.
2. Herstellung einer Pigmentpaste mit Antischaummittel
2.1 Herstellung eines Reibharzes
   640 Teile eines Diglycidylethers auf Basis von Bisphenol A und Epichlorhydrin mit einem Epoxid-Äquivalentgewicht von 485 und 160 Teile eines solchen mit einem Epoxid-Äquivalentgewicht von 189 werden bei 100°C gemischt. In einem weiteren Gefäß werden 452 Teile Hexamethylendiamin vorgelegt, auf 100°C erhitzt und 720 Teile der obigen heißen Epoxidharzmischung innerhalb einer Stunde zugegeben, wobei leicht gekühlt werden muß, um die Temperatur bei 100°C zu halten. Nach weiteren 30 min wird unter Temperaturerhöhung und vermindertem Druck das überschüssige Hexamethylendiamin abgezogen, wobei zum Schluß eine Temperatu von 205°C und ein Druck von 30 mbar erreicht wird.
   Anschließend werden 57,6 Teile Stearinsäure, 172,7 Teile Dimerfettsäure und 115 Teile Xylol zugesetzt. Dann wird innerhalb von 90 min bei 175 bis 180°C das gebildete Wasser azeotrop abdestilliert. Anschließend werden 58 Teile Butylglykol und 322 Teile Isobutanol zugefügt. Das Produkt hat einen Feststoffgehalt von 70 % und eine Viskosität, gemessen bei 75°C mit einem Platte-Kegel-Viskosimeter, von 2240 mPas.
2.2 Herstellung der Pigmentpaste
   586 Teile des Reibharzes gemäß 2.1 werden mit 1162 Teilen entionisiertem Wasser und 22 Teilen Eisessig vorgelegt und mit 37 Teilen einer 50 %igen Lösung aus 70 Teilen Stearinsäureisodecylester, 15 Teilen C₁₆/C₁₈-Fettalkoholphosphat und 15 Teilen eines C₁₀-C₁₃-Kohlenwasserstoffgemisches (SHELLSOL K der Fa. Shell) in Butylglykol intensiv vermischt. Anschließend wird mit 880 Teilen Titandioxid, 250 Teilen eines Extenders auf Basis Aluminiumsilikat, 53 g basischem Bleisilikat und 10 Teilen Ruß vermengt. Diese Mischung wird mit einem Dissolver homogenisiert (ca. 30 bis 60 Minuten) und anschließend in einem Mahlaggregat auf eine Hegman-Feinheit von kleiner 12 µm zerkleinert. Danach wird mit entionisiertem Wasser auf einen Festkörper von 62 % verdünnt.
3. Zubereitung erfindungsgemäßer Elektrotauchlackbäder und Abscheidungen
   2200 Gew.-Teile der Dispersionen gemäß 1.3. werden mit 700 Teilen der Pigmentpaste gemäß 2.2. versetzt und mit entionisiertem Wasser auf einen Badfestkörper von 20 Gew.-% eingestellt. Die Abscheidung der Lackfilme geschieht während 2 Minuten bei 350 V auf zinkphosphatierten Stahlblechen. Die Badtemperatur beträgt 27°C. Die Naßfilme werden bei 160°C 20 Minuten eingebrannt.

- Elektrotauchlackbad 1:: Dispersion nach 1.3. Pigmentpaste nach 2.2.
- Elektrotauchlackbad 2:: Dispersion nach 1.3 Pigmentpaste nach 2.2., aber ohne Zusatz an Stearinsäureisodecylester, SHELLSOL K und dem Fettalkoholphosphat in Butylglykol

Jeweils 50 g Badmaterial wurden parallel in 100 ml Standzylindern 5 Minuten intensiv geschüttelt. Es wurde die Zeit bestimmt, nach der der aufgetretene Schaum wieder zusammengebrochen war.

| | Elektrotauchbad | |
|---|---|---|
| | 1 | 2 |
| Meßzeit | 20 Sek. | >1 Stunde |

| | Elektrotauchbad | |
|---|---|---|
| | 1 | 2 |
| Schichtdicke (µm) | 20 | 20 |
| Verlauf: 0 bis 5 | 1.5 | 1.5 |
| Krater/dm² | 0.5 | 1.5 |

Diese Filme wurden nun mit einem handelsüblichen Wasserfüller und einem weißen Alkyddecklack überlackiert und 240 Stunden im Schwitzwasser-Konstant-Klima getestet. Danach wurde die Haftung der Filme mittels Gitterschnitt und Tesaabriß geprüft.

| | Elektrotauchbad | |
|---|---|---|
| | 1 | 2 |
| Haftung: 0 bis 5 | 0.5 | 0.5 |

Die KTL-Bäder wurden anschließend mit 0.1 % ASTM-ÖL kontaminiert. Das Öl wurde innerhalb eines Tages eingerührt. Danach erfolgten Abscheidungen wie oben beschrieben.

| | Elektrotauchbad | |
|---|---|---|
| | 1 | 2 |
| Krater/dm² | 1.5 | >50 |

## Patentansprüche

1. Elektrotauchlack, enthaltend ein kathodisch abscheidbares Kunstharz und ein Antischaummittel, dadurch gekennzeichnet, daß das Antischaummittel eine Mischung ist aus
a. 50 - 70 Gew.-% eines Esters der Stearinsäure mit einem C₂-C₂₀-Alkohol,
b. 5 - 30 Gew.-% eines Fettalkoholphosphats
c. 5 - 30 Gew.-% eines C₈-C₂₀-Kohlenwasserstoffgemisches.

2. Elektrotauchlack nach Anspruch 1, dadurch gekennzeichnet, daß das Kunstharz A in wäßriger Dispersion vorliegt und ein aminmodifiziertes Epoxidharz, einen Vernetzer und eine Pigmentpaste enthält.

3. Elektrotauchlack nach Anspruch 1, dadurch gekennzeichnet, daß er 10 bis 10.000 ppm, bezogen auf Feststoffgehalt, der Antischaummittel-Mischung enthält.

4. Verfahren zum Beschichten von metallischen Substraten, bei dem das als Kathode geschaltete Substrat in eine wäßrige Dispersion des Elektrotauchlacks nach Anspruch 1 eingetaucht, durch Gleichstrom ein Lackfilm auf dem Substrat abgeschieden und nach Entfernen des Substrats aus dem Bad der Lackfilm bei erhöhter Temperatur eingebrannt wird.
